# EUROPÄISCHE PATENTSCHRIFT

(11) **EP 2 477 014 B1**
(45) Veröffentlichungstag und Bekanntmachung des Hinweises auf die Patenterteilung: **21.08.2013**
(21) Anmeldenummer: 11192550.9
(22) Anmeldetag: 08.12.2011
(51) Int. Cl.: G01F 23/36

(54) **Füllstandsgeber**
Fill level detector
Indicateur de niveau de remplissage

(30) Priorität: 15.12.2010 DE 102010054670
(43) Veröffentlichungstag der Anmeldung: 18.07.2012
(73) Patentinhaber: Continental Automotive GmbH, 30165 Hannover (DE)
(72) Erfinder: Brinkis, Waldemar, 61130 Nidderau (DE); Kallweit, Gerhard, 60528 Frankfurt (DE); Mattmann, Erich, 55262 Heidesheim (DE)

(56) Entgegenhaltungen:
- WO-A2-03/003384
- DE-A1-102007 061 316
- US-A1- 2004 075 564

## Beschreibung

Gegenstand der Erfindung ist ein Füllstandsgeber, bestehend aus einem Träger, einem Bügel mit einem Hebelarm und einem im Träger angeordneten Substrat mit einem Widerstandsnetzwerk in Dickschichttechnologie, welches eine Widerstandsschicht und mehrere nebeneinander angeordnete Leiterbahnen aufweist, die derart angeordnet sind, dass sie in Verbindung mit einem am Bügel angeordneten Schleifkontakt einen Potentiometerabgriff ermöglichen, wobei die Leiterbahnen senkrecht zur Bahn des Schleifkontakts angeordnet sind, jede Leiterbahn einen ersten Bereich aufweist, der in der Bahn des Schleifkontaktes angeordnet ist, jede Leiterbahn einen zweiten Bereich aufweist, der neben der Bahn des Schleifkontaktes angeordnet ist, die beiden Bereiche jeder Leiterbahn einander überlappen und aus unterschiedlichen Materialien bestehen, wobei für den ersten Bereich ein gegenüber dem zweiten Bereich edleres Material zum Einsatz kommt und dass der zweite Bereich der Leiterbahnen einschließlich der Überlappung von der Widerstandsschicht bedeckt ist.

Derartige Füllstandsgeber werden in Kraftstoffbehältern von Kraftfahrzeugen eingesetzt und sind bekannt (siehe z.B. DE-A-10 2007 061 316). Bei einer Bewegung des Hebelarms überstreicht der Schleifkontakt die Leiterbahnen des Widerstandsnetzwerkes in einer bogenförmigen Bahn. Im Bereich dieser bogenförmigen Bahn sind die Leiterbahnen radial angeordnet, so dass jede einzelne Leiterbahn senkrecht zu der bogenförmigen Bahn des Schleifkontaktes ausgerichtet ist. Es ist auch bekannt, die Leiterbahnen zueinander parallel anzuordnen. Aufgrund des Radius der bogenförmigen Bahn sind die Leiterbahnen auch in dieser Ausführung nahezu senkrecht zu der bogenförmigen Bahn ausgerichtet. Bei heutigen Kraftstoffen bestehen die Leiterbahnen aus einer Silber-Palladium-Mischung. Bei korrosiven Kraftstoffen, die beispielsweise Ethanol enthalten, ist es bekannt, aufgrund der besseren Korrosionsbeständigkeit die Leiterbahnen aus einer Gold-Platin-Palladium-Mischung herzustellen. Diese Mischung hat jedoch den Nachteil, dass sie wesentlich teurer als eine Silber-Palladium-Mischung ist. Aus diesem Grund ist es bekannt, die Gold-Platin-Palladium-Mischung lediglich im Bereich der Bahn des Schleifkontaktes anzuordnen und außerhalb dieses Bereiches die kostengünstigere Silber-Palladium-Mischung zu verwenden.

Für die Herstellung des Widerstandsnetzwerkes wird die jeweilige Mischung für die Leiterbahnen als Paste auf das Substrat gedruckt und anschließend gesintert. Um die beiden Bereiche der jeweiligen Leiterbahnen miteinander zu verbinden, wird die zweite Mischung mit einer geringen Überlappung auf den bereits erzeugten ersten Bereich der jeweiligen Leiterbahn aufgedruckt. Die Widerstandsschicht wird ebenfalls als Paste aufgedruckt und anschließend gesintert, wobei sie die Leiterbahnen im zweiten Bereich vollständig überdeckt. Nachteilig dabei ist, dass die Leiterbahnen durch die Überlappung eine größere Höhe aufweisen. Das hat zur Folge, dass von der nach dem Leiterbahndruck aufzubringenden Widerstandsschicht wesentlich mehr Material benötigt wird. Der Mehrverbrauch kommt dadurch zustande, dass die Widerstandsschicht die Leiterbahnen und die Bereiche zwischen den Leiterbahnen flächig überdecken muss. Die größere Höhe der Leiterbahnen bewirkt, dass die Bereiche zwischen den einzelnen Leiterbahnen wesentlich mehr Widerstandspaste aufnehmen. Zudem müssen die unterschiedlichen Leiterbahnmaterialien genau aufeinander abgestimmt werden, damit es beim Sintern nicht zu Terminierungseffekten, wie Blasenbildung oder das Abheben der Pasten, kommt.

Der Erfindung liegt die Aufgabe zugrunde, einen kostengünstigen Füllstandsgeber zu schaffen, welcher auch bei korrosiven Kraftstoffen eine ausreichende Beständigkeit aufweist. Gelöst wird die Aufgabe dadurch, dass die beiden Bereiche jeder Leiterbahn mit Abstand zueinander angeordnet sind und dass die einander gegenüberliegenden Enden der beiden Bereiche jeder Leiterbahn derart ausgebildet sind, dass sie nach einer Art Kammstruktur in den Bereich des gegenüberliegenden Endes eingreifen.

Mit der erfindungsgemäßen Gestaltung ist die Überlappung der beiden Bereiche nicht mehr senkrecht zur Ebene des Substrats ausgebildet, sie befindet sich nunmehr auf der Substratebene. Dadurch wird erreicht, dass die Leiterbahnen keine erhöhten Bereiche aufweisen und die Widerstandschicht mit wesentlich geringerer Schichtdicke angeordnet werden kann. Die Anordnung der beiden Bereiche in einem Abstand zueinander ist hierbei besonders hilfreich, da auf diese Weise Toleranzen beim Positionieren und Drucken ausgeglichen werden. Ein Überlappen der beiden Bereiche senkrecht zur Substratebene wird somit wirksam vermieden. Terminierungseffekte sind dadurch ebenfalls ausgeschlossen.

In einer Ausgestaltung ist das edlere Material im ersten Bereich eine Gold-Platin-Palladium-Paste. Dieses Material zeichnet sich durch eine gute Korrosionsbeständigkeit von Kraftstoffen aus, auch wenn diese aggressive Zusätze wie Ethanol enthalten. Als unedleres Material für den zweiten Bereich wird eine Silber-Palladium-Paste verwendet.

Um ein vertikales Überlappen der beiden Bereiche der jeweiligen Leiterbahnen infolge von Fertigungstoleranzen wirksam zu vermeiden, hat es sich als vorteilhaft erwiesen, die beiden einander gegenüberliegenden Enden jeder Leiterbahn beim Übergang von dem einen Material zum anderen Material in einem Abstand von 5 µm - 100 µm, vorzugsweise 10 µm - 50 µm, anzuordnen.

In einer anderen Ausgestaltung beträgt die Breite der Leiterbahn im Bereich des Übergangs von einem Material zum anderen Material 150 µm - 300 µm, vorzugsweise 200 µm.

In einer besonders einfachen Ausgestaltung wird das Überlappen der beiden Bereiche in der Substratebene dadurch erreicht, dass ein Ende eines Bereichs der Leiterbahn zumindest einen Zahn besitzt, der in einen zurückgesetzten Abschnitt des gegenüberliegenden Endes des anderen Bereichs eingreift.

Eine besonders dichte kammartige Überlappung wird mit einer Ausgestaltung erreicht, bei der das eine Ende eines Bereichs der Leiterbahn zumindest einen Zahn besitzt, der sich bis in das gegenüberliegende Ende des anderen Bereichs der Leiterbahn erstreckt, wobei der Zahn in eine Lücke eingreift, die zwischen zwei Zähnen des anderen Bereichs gebildet ist.

Die Zähne können sowohl eine Rechteckform als auch eine Keilform besitzen. In einer prozessoptimierten Ausgestaltung sind diese Zahnformen an den Ecken abgerundet. Die Ausbildung von Ecken wird vermeiden, wenn die Zähne und zurückgesetzten Abschnitte eine Wellenform bilden.

Für die Breite eines Zahns haben sich maximal 100 µm, vorzugsweise 80 µm - 10 µm herausgestellt.

In einer einfachen Ausgestaltung weisen alle Zähne die gleiche Breite, vorzugsweise von 40 µm - 60 µm, auf. Es ist aber auch möglich, die Zähne mit unterschiedlichen Breiten auszubilden. Insbesondere wenn die beiden Bereiche unterschiedliche Anzahlen von Zähnen aufweisen, können die äußeren Zähne eine geringere Breite aufweisen.

An mehreren Ausführungsbeispielen wird die Erfindung näher erläutert. Es zeigen in:
- Figur 1: einen Füllstandsgeber,
- Figur 2: das Substrat gemäß Figur 1,
- Figur 3: eine Leiterbahn nach dem Stand der Technik,
- Figur 4: eine erfindungsgemäße Leiterbahn und
- Figuren 5 - 7: weitere Ausführungsformen der Leiterbahn.

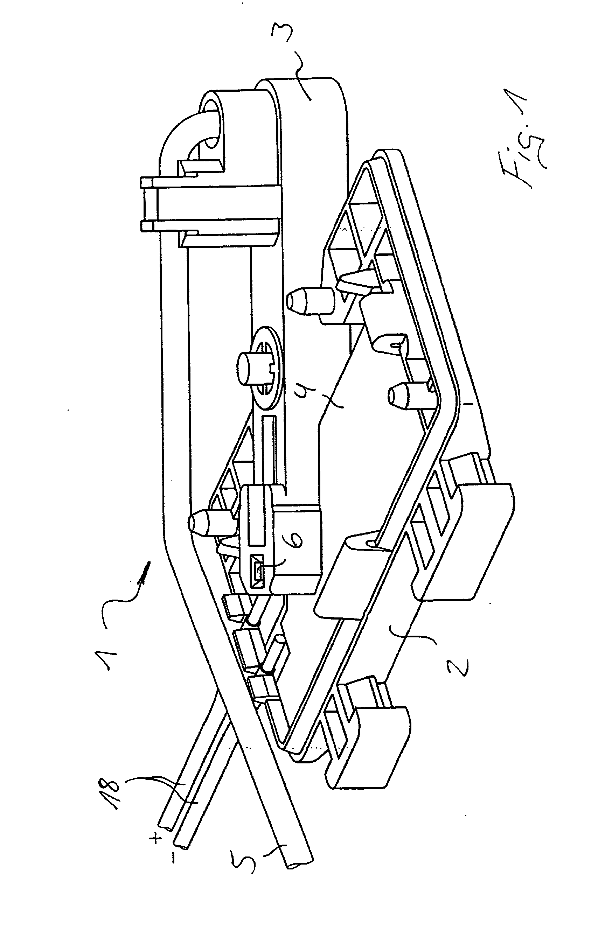

Der Füllstandsgeber 1 in Figur 1 wird in Kraftstoffbehältern von Kraftfahrzeugen eingesetzt. Er besteht aus einem Träger 2, einem drehbar im Träger 2 gelagerten Bügel 3 und einem im Träger 2 gelagerten Substrat 4. Im Bügel 3 ist ein Hebelarm 5 angeordnet, dessen nicht dargestelltes freies Ende einen Schwimmer trägt, der in Abhängigkeit vom Füllstand im Kraftstoffbehälter ein Verschwenken des Hebelarms 5 und des Bügels 3 bewirkt. Der Bügel 3 weist weiter einen Schleifkontakt 6 auf, der beim Verschwenken des Bügels 3 auf einer bogenförmigen Bahn das Substrat 4 überstreift. Über elektrische Signalleitungen 18 ist der Füllstandsgeber mit einer Auswerteelektronik elektrisch verbunden.

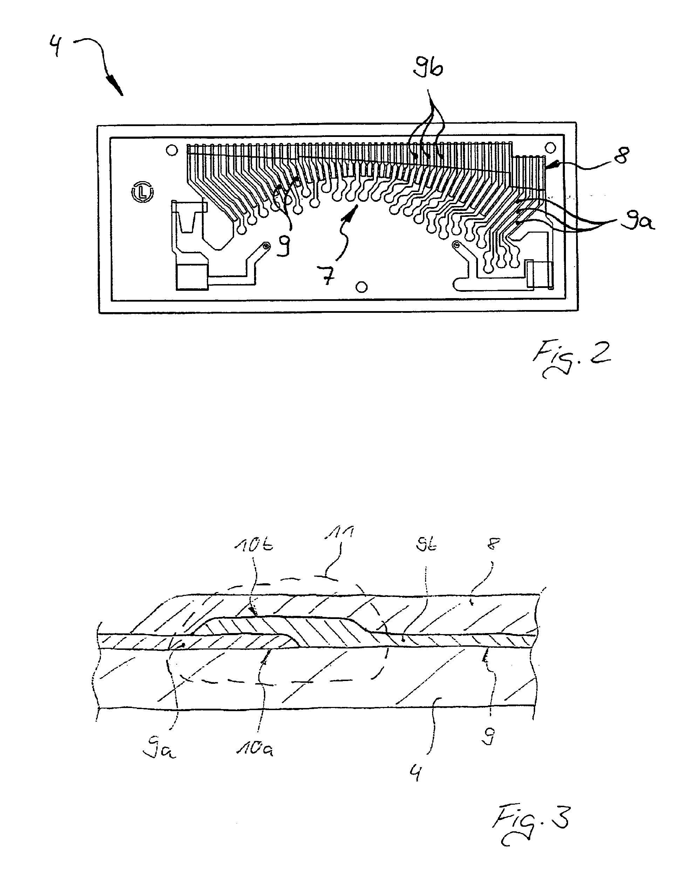

Figur 2 zeigt das Substrat 4 aus Figur 1, welches aus einer Aluminiumoxidkeramik besteht. Auf dem Substrat 4 ist ein Widerstandsnetzwerk 7 in Dickschichttechnologie aufgebracht. Das Widerstandsnetzwerk 7 besteht unter anderem aus einer Widerstandsschicht 8 und einer Vielzahl von Leiterbahnen 9. Die Leiterbahnen 9 bestehen aus einem ersten Bereich 9a und einem zweiten Bereich 9b. Im ersten Bereich 9a sind die Leiterbahnen radial zum Schwenkradius des Hebelarms angeordnet, so dass sie senkrecht zu der bogenförmigen Bahn des Schleifkontakts liegen, auf der der Schleifkontakt das Widerstandsnetzwerk 7 überstreift. Der zweite Bereich 9b der Leiterbahnen 9 ist der Bereich, welcher von der Widerstandsschicht 8 überdeckt wird.

In Figur 3 ist eine Leiterbahn 9 nach dem Stand der Technik an der Schnittstelle zwischen erstem und zweitem Bereich 9a, 9b in einer Schnittdarstellung gezeigt. Auf dem Substrat 4 wurde zuerst der erste Bereich 9a der Leiterbahn als Paste aufgedruckt und anschließend gesintert. Da der erste Bereich 9a frei liegt und somit mit dem Kraftstoff in Berührung kommt, besteht der erste Bereich 9a aus einer Gold-Platin-Palladium-Paste. Als nächstes wird der zweite Bereich 9b aufgedruckt und gesintert. Um eine gute Verbindung der beiden Bereiche 9a, 9b der Leiterbahn 9 zu erhalten, überlappt der zweite Bereich 9b mit seinem Ende 10b des Ende 10a des ersten Bereichs 9a, wobei die Überlappung 11 senkrecht zur Ebene des Substrats 4 ausgerichtet ist. Dadurch weist die Leiterbahn 9 im Bereich der Überlappung 11 die doppelte Höhe auf.

Als letzte Schicht wird die Widerstandsschicht 8 aufgebracht. Die Widerstandsschicht 8 überdeckt die zweiten Bereiche 9b der Leiterbahnen 9 und den Bereich der Überlappung 11. Infolge der Abdeckung der Überlappung 11 durch die Widerstandsschicht 8, besitzt diese im zweiten Bereich 9b eine relativ große Dicke. Durch die vollständige Abdeckung der zweiten Bereiche 9b mit der Widerstandsschicht 8 sind diese vor dem Kontakt mit dem Kraftstoff geschützt, so dass für die zweiten Bereiche 9b ein unedleres, jedoch kostengünstigeres Leiterbahnmaterial in Form einer Silber-Palladium-Paste verwendet wird.

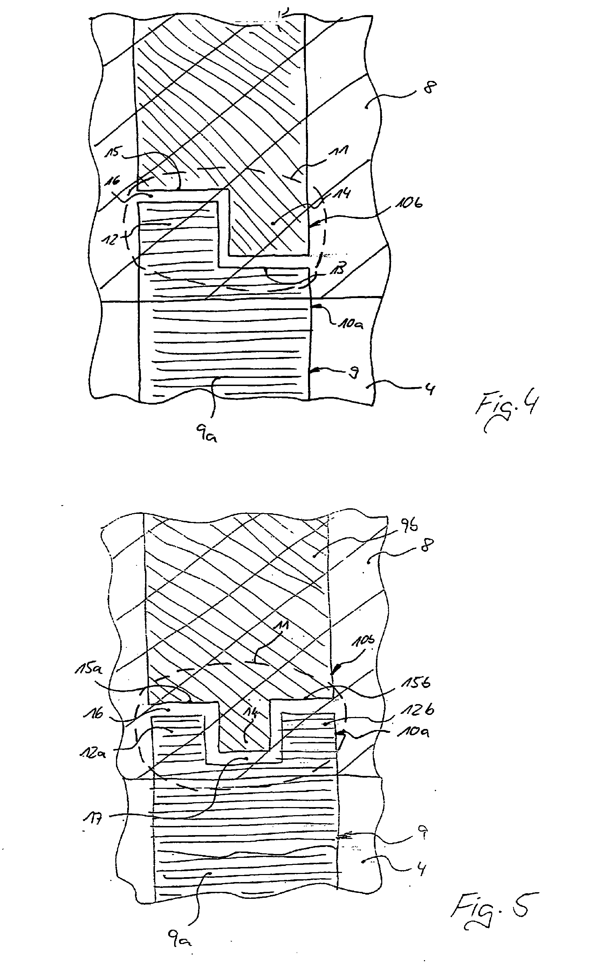

Figur 4 zeigt eine erfindungsgemäße Leiterbahn 9 mit einer Breite von 200 µm auf einem Substrat 4 in einer Draufsicht. Die Leiterbahn 9 besitzt zwei Bereiche 9a, 9b, deren Enden 10a, 10b mit einem Abstand 16 von 15 µm einander gegenüberliegen. Das Ende 10a des ersten Bereichs 9a weist einen Zahn 12 und einen zurückgesetzten Abschnitt 13 auf. Das gegenüberliegende Ende 10b besitzt spiegelbildlich die gleiche Struktur mit einem Zahn 14 und einem zurückgesetzten Abschnitt 15. Die beiden Enden 10a, 10b sind mit einem Abstand 16 zueinander angeordnet, wobei die Zähne 12, 14 in die jeweiligen zurückgesetzten Abschnitte 13, 15 eingreifen. Die Zähne 12, 14 und die zurückgesetzten Abschnitte 13, 15 sind rechteckförmig ausgebildet. Durch diese Ausbildung der Enden 10a, 10b kommt es zu einer Überlappung 11 der beiden Bereiche 9a, 9b, wobei die Überlappung zu der Ebene des Substrats 4 ausgerichtet ist. Mit der in der Substratebene liegende Überlappung nach Art einer Kammstruktur gibt es keinen Bereich, in dem die Leiterbahn 9 eine vergrößerte Höhe besitzt. Dadurch besitzt die Widerstandsschicht 8, welche den zweiten Bereich 9b und die Überlappung 11 überdeckt, im Vergleich zu Fig. 4 eine wesentlich geringere Schichtdicke.

Die Leiterbahn 9 in Figur 5 entspricht hinsichtlich der Überlappung 11 des ersten Bereichs 9a mit dem zweiten Bereich 9b der Leiterbahn in Fig. 5. Lediglich die Enden 10a, 10b der beiden Bereiche 9a, 9b unterscheiden sich. Das Ende 10b des zweiten Bereichs 9b weist einen Zahn 14 auf, der in die Lücke 17 zwischen den beiden Zähnen 12a, 12b des ersten Bereichs 9a eingreift, während die Zähne 12a, 12b in die zurückgesetzten Abschnitte 15a, 15b eingreifen.

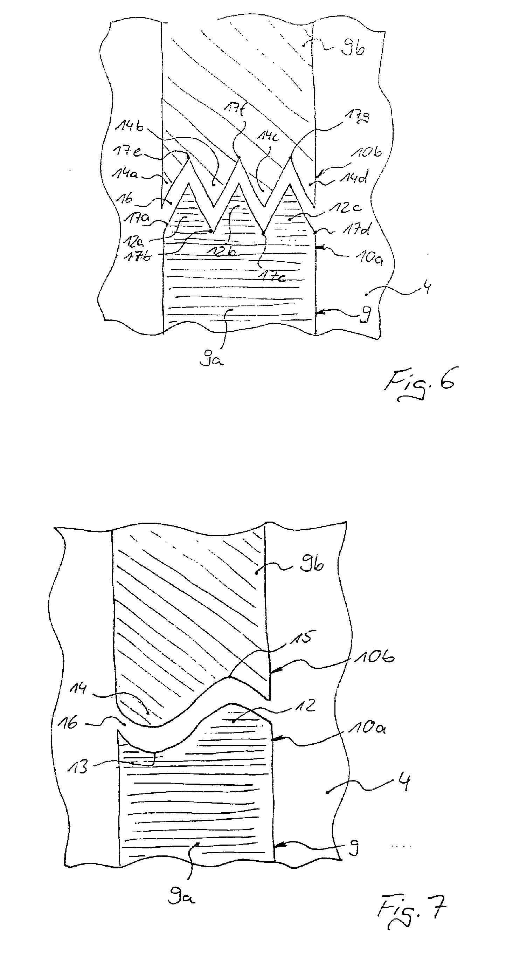

Figur 6 zeigt eine Leiterbahn 9 nach Fig. 6, wobei zur besseren Darstellung die Widerstandsschicht nicht gezeigt ist. Die Breite der Leiterbahn 9 beträgt 200 µm, während der Abstand 16 zwischen den beiden Bereichen 9a, 9b 30 µm beträgt. Die Zähne 12a - c, 14a - d und die Lücken 17a - g der Bereiche 9a, 9b sind keilförmig ausgebildet, wobei der erste Bereich 9a eine Lücke 17 und der zweite Bereich 9b einen Zahn 14 mehr aufweist als der jeweils gegenüberliegende Bereich. Zudem besitzen die Zähne 14 a, d und die zurückgesetzten Bereiche 17a, d eine geringere Breite als die übrigen Zähne und zurückgesetzten Bereiche.

Die Zähne und zurückgesetzten Bereiche können auch eine abgerundete Kontur aufweisen. In Figur 7 sind die Zähne und zurückgesetzten Bereiche derart abgerundet, dass sie eine gleichmäßige Wellenform bilden.

## Patentansprüche

1. Füllstandsgeber, bestehend aus einem Träger, einem Bügel mit einem Hebelarm und einem im Träger angeordneten Substrat mit einem Widerstandsnetzwerk in Dickschichttechnologie, welches eine Widerstandsschicht und mehrere nebeneinander angeordnete Leiterbahnen aufweist, die derart angeordnet sind, dass sie in Verbindung mit einem am Bügel angeordneten Schleifkontakt einen Potentiometerabgriff ermöglichen, wobei die Leiterbahnen senkrecht zur Bahn des Schleifkontakts angeordnet sind, jede Leiterbahn einen ersten Bereich aufweist, der in der Bahn des Schleifkontaktes angeordnet ist, jede Leiterbahn einen zweiten Bereich aufweist, der neben der Bahn des Schleifkontaktes angeordnet ist, die beiden Bereiche jeder Leiterbahn einander überlappen und aus unterschiedlichen Materialien bestehen, wobei für den ersten Bereich ein gegenüber dem zweiten Bereich edleres Material zum Einsatz kommt und dass der zweite Bereich der Leiterbahnen einschließlich der Überlappung von der Widerstandsschicht bedeckt ist, **dadurch ge- kennzeichnet**, dass die beiden Bereiche (9a, 9b) jeder Leiterbahn (9) mit Abstand (16) zueinander angeordnet sind und dass die einander gegenüberliegenden Enden (10a, 10b) der beiden Bereiche (9a, 9b) jeder Leiterbahn (9) derart ausgebildet sind, dass sie nach einer Art Kammstruktur in den Bereich (9b, 9a) des gegenüberliegenden Endes (10b, 10a) eingreifen.

2. Füllstandsgeber nach Anspruch 1, **dadurch gekennzeichnet, dass** das edlere Material im ersten Bereich (9a) eine Gold-Platin-Palladium-Paste ist.

3. Füllstandsgeber nach Anspruch 1 und 2, **dadurch gekennzeichnet, dass** das Material des zweiten Bereichs (9b) eine Silber-Palladium-Paste ist.

4. Füllstandsgeber nach Anspruch 1 und 2, **dadurch gekennzeichnet , dass** die beiden einander gegenüberliegenden Enden (10a, 10b) jeder Leiterbahn (9) beim Übergang von dem einen Material zum anderen Material einen Abstand (16) von 5 µm - 100 µm, vorzugsweise 10 µm - 80 µm, aufweisen.

5. Füllstandsgeber nach zumindest einem der Ansprüche 1 bis 3, **dadurch gekennzeichnet , dass** die Breite der Leiterbahn (9) im Bereich des Übergangs von einem Material zum anderen Material 150 µm - 300 µm, vorzugsweise 200 µm beträgt.

6. Füllstandsgeber nach zumindest einem der Ansprüche 1 bis 5, **dadurch gekennzeichnet, dass** das ein Ende (10a, 10b) eines Bereichs (9a, 9b) der Leiterbahn (9) zumindest einen Zahn (12, 14) besitzt, der in einen zurückgesetzten Abschnitt (13, 15, 17) des gegenüberliegenden Endes (10a, 10b) des anderen Bereichs (9a, 9b) eingreift.

7. Füllstandsgeber nach Anspruch 6, **dadurch gekennzeichnet, dass** das eine Ende (10a, 10b) eines Bereichs (9a, 9b) der Leiterbahn (9) zumindest einen Zahn (12, 14) besitzt, der sich bis in das gegenüberliegende Ende (10a, 10b) des anderen Bereichs (9a, 9b) der Leiterbahn (9) erstreckt, wobei der Zahn (12, 14) in eine Lücke eingreift, die zwischen zwei Zähnen (12, 14) des anderen Bereichs (9a, 9b) gebildet ist.

8. Füllstandsgeber nach Anspruch 6, **dadurch gekennzeichnet dass** die Zähne (12, 14) eine Rechteckform besitzen.

9. Füllstandsgeber nach Anspruch 6, **dadurch gekennzeichnet, dass** die Zähne (12, 14) eine Wellenform besitzen.

10. Füllstandsgeber nach Anspruch 6, **dadurch gekennzeichnet, dass** die Zähne (12, 14) eine Keilform besitzen.

11. Füllstandsgeber nach zumindest einem der Ansprüche 6 bis 10, **dadurch gekennzeichnet, dass** ein Zahn (12, 14) eine Breite von maximal 100 µm, vorzugsweise von 100 µm - 10 µm besitzt.

12. Füllstandsgeber nach zumindest einem der Ansprüche 6 bis 11, **dadurch gekennzeichnet, dass** alle Zähne (12, 14) die gleiche Breite, vorzugsweise von 40 µm - 60 µm, aufweisen.

13. Füllstandsgeber nach zumindest einem der Ansprüche 6 bis 12, **dadurch gekennzeichnet, dass** die Zähne (12, 14) unterschiedliche Breiten aufweisen.

## Claims

1. Filling lever sensor comprising a carrier, a bracket having a lever arm, and a substrate which is arranged in the carrier and has a thick-film resistor network which has a resistor layer and a plurality of conductor tracks which are arranged next to one another and which are arranged in such a way that they, in conjunction with a sliding contact which is arranged on the bracket, allow a potentiometer tap, wherein the conductor tracks are arranged perpendicular to the path of the sliding contact, each conductor track has a first region which is arranged in the path of the sliding contact, each conductor track has a second region which is arranged next to the path of the sliding contact, the two regions of each conductor track overlap one another and are composed of different materials, wherein the material which is used for the first region is of higher-quality than that of the second region, and wherein the second region of the conductor tracks including the overlap is covered by the resistor layer, **characterized in that** the two regions (9a, 9b) of each conductor track (9) are arranged at a distance (16) from one another, and **in that** the opposing ends (10a, 10b) of the two regions (9a, 9b) of each conductor track (9) are formed in such a way that they engage in the region (9b, 9a) of the opposite end (10b, 10a) in the manner of a comb structure.

2. Filling level sensor according to Claim 1, **characterized in that** the higher-quality material in the first region (9a) is a gold-platinum-palladium paste.

3. Filling level sensor according to Claims 1 and 2, **characterized in that** the material of the second region (9b) is a silver-palladium paste.

4. Filling level sensor according to Claims 1 and 2, **characterized in that** the two opposite ends (10a, 10b) of each conductor track (9) are at a distance (16) of 5 µm - 100 µm, preferably 10 µm - 80 µm, at the transition from one material to the other material.

5. Filling level sensor according to at least one of Claims 1 to 3, **characterized in that** the width of the conductor track (9) in the region of the transition from one material to the other material is 150 µm - 300 µm, preferably 200 µm.

6. Filling level sensor according to at least one of Claims 1 to 5, **characterized in that** one end (10a, 10b) of one region (9a, 9b) of the conductor track (9) has at least one tooth (12, 14) which engages in a recessed section (13, 15, 17) of the opposite end (10a, 10b) of the other region (9a, 9b).

7. Filling level sensor according to Claim 6, **characterized in that** one end (10a, 10b) of one region (9a, 9b) of the conductor track (9) has at least one tooth (12, 14) which extends into the opposite end (10a, 10b) of the other region (9a, 9b) of the conductor track (9), wherein the tooth (12, 14) engages in a gap which is formed between two teeth (12, 14) of the other region (9a, 9b).

8. Filling level sensor according to Claim 6, **characterized in that** the teeth (12, 14) have a rectangular shape.

9. Filling level sensor according to Claim 6, **characterized in that** the teeth (12, 14) have a wave-like shape.

10. Filling level sensor according to Claim 6, **characterized in that** the teeth (12, 14) have a wedge-like shape.

11. Filling level sensor according to at least one of Claims 6 to 10, **characterized in that** a tooth (12, 14) has a width of at most 100 µm, preferably of 100 pm - 10 µm.

12. Filling level sensor according to at least one of Claims 6 to 11, **characterized in that** all of the teeth (12, 14) have the same width, preferably of 40 pm - 60 µm.

13. Filling level sensor according to at least one of Claims 6 to 12, **characterized in that** the teeth (12, 14) have different widths.

## Revendications

1. Indicateur de niveau, constitué d'un support, d'un étrier ayant un bras de levier et d'un substrat mis dans le support et ayant un réseau de résistance en technologie en couche épaisse, réseau qui a une couche résistante et plusieurs pistes conductrices, qui sont disposées les unes à côté des autres et qui sont disposées de manière à rendre possible, en liaison avec un contact par frottement disposé sur l'étrier, une prise de potentiomètre, les pistes conductrices étant disposées perpendiculairement à la piste du contact par frottement, chaque piste conductrice ayant une première zone, qui est disposée dans la piste du contact par frottement, chaque piste conductrice ayant une deuxième zone, qui est disposée à côté de la piste du contact par frottement, les deux zones de chaque piste conductrice se chevauchant l'une l'autre et étant en des matériaux différents, un matériau plus précieux étant utilisé pour la première zone que pour la deuxième zone, et en ce que la deuxième zone des pistes conductrices est recouverte, y compris le chevauchement, de la couche résistante, **caractérisé en ce que** les deux zones (9a, 9b) de chaque piste (9) conductrice sont disposées à distance (16) l'une de l'autre et **en ce que** les extrémités (10a, 10b) opposées l'une à l'autre des deux zones (9a, 9b) de chaque piste (9) conductrice sont constituées de manière à pénétrer à la façon d'une structure en peigne dans la zone (9b, 9a) de l'extrémité (10b, 10a) opposée.

2. Indicateur de niveau suivant la revendication 1, **caractérisé en ce que** le matériau plus précieux dans la première zone (9a) est une pâte d'or-platine-palladium.

3. Indicateur de niveau suivant la revendication 1 et 2, **caractérisé en ce que** le matériau de la deuxième zone (9b) est une pâte d'argent-palladium.

4. Indicateur de niveau suivant la revendication 1 et 2, **caractérisé en ce que** les deux extrémités (10a, 10b) opposées l'une à l'autre de chaque piste (9) conductrice ont, au passage d'un matériau à l'autre matériau, une distance (16) de 5 µm à 100 µm, de préférence de 10 µm à 80 µm.

5. Indicateur de niveau suivant au moins l'une des revendications 1 à 3, **caractérisé en ce que** la largeur de la piste (9) conductrice va de 150 µm à 300 µm, en étant de préférence de 200 µm dans la zone du passage d'un matériau à l'autre.

6. Indicateur de niveau suivant au moins l'une des revendications 1 à 5, **caractérisé en ce que** l'une des extrémités (10a, 10b) d'une zone (9a, 9b) de la piste (9) conductrice a au moins une dent (12, 14), qui pénètre dans une partie (13, 15, 17) en retrait de l'extrémité (10a, 10b) opposée de l'autre zone (9a, 9b).

7. Indicateur de niveau suivant la revendication 6, **caractérisé en ce que** l'une des extrémités (10a, 10b) d'une zone (9a, 9b) de la piste (9) conductrice a au moins une dent (12, 14), qui s'étend jusque dans l'extrémité (10a, 10b) opposée de l'autre zone (9a, 9b) de la piste (9) conductrice, la dent (12, 14) pénétrant dans un intervalle formé entre deux dents (12, 14) de l'autre zone (9a, 9b).

8. Indicateur de niveau suivant la revendication 6, **caractérisé en ce que** les dents (12, 14) ont une forme rectangulaire.

9. Indicateur de niveau suivant la revendication 6, **caractérisé en ce que** les dents (12, 14) ont une forme ondulée.

10. Indicateur de niveau suivant la revendication 6, **caractérisé en ce que** les dents (12, 14) sont cunéiformes.

11. Indicateur de niveau suivant au moins l'une des revendications 6 à 10, **caractérisé en ce qu'**une dent (12, 14) a une largeur de 100 µm au maximum, de préférence de 100 µm à 10 µm.

12. Indicateur de niveau suivant au moins l'une des revendications 6 à 11, **caractérisé en ce que** toutes les dents (12, 14) ont la même largeur, allant de préférence de 40 µm à 60 µm.

13. Indicateur de niveau suivant au moins l'une des revendications 6 à 12, **caractérisé en ce que** les dents (12, 14) ont des largeurs différentes.
